# EUROPÄISCHE PATENTSCHRIFT

(11) **EP 2 960 437 B1**
(45) Veröffentlichungstag und Bekanntmachung des Hinweises auf die Patenterteilung: **08.08.2018**
(21) Anmeldenummer: 15172837.5
(22) Anmeldetag: 19.06.2015
(51) Int. Cl.: F01D 9/04, F01D 17/16, F04D 29/56, F01D 9/02, F01D 11/00, F04D 29/64, F01D 25/28

(54) **LEITSCHAUFELVORRICHTUNG FÜR EINE GASTURBINE SOWIE GASTURBINE MIT EINER SOLCHEN LEITSCHAUFELVORRICHTUNG**
VARIABLE GUIDE VANE DEVICE FOR A GAS TURBINE AND GAS TURBINE EQUIPPED WITH SUCH A DEVICE
SYSTÈME D'AUBES DE GUIDAGE VARIABLES POUR UNE TURBINE À GAZ ET TURBINE À GAZ DOTÉE D'UN TEL SYSTÈME

(30) Priorität: 26.06.2014 DE 102014212310
(43) Veröffentlichungstag der Anmeldung: 30.12.2015
(73) Patentinhaber: MTU Aero Engines AG, 80995 München (DE)
(72) Erfinder: Böck, Alexander, 82288 Kottgeisering (DE)

(56) Entgegenhaltungen:
- GB-A- 2 210 935
- US-A- 3 558 237
- US-A- 4 834 613
- US-A1- 2012 093 632

## Beschreibung

Die Erfindung betrifft eine Leiteinrichtung für eine Gasturbine, insbesondere für ein Flugtriebwerk, gemäß dem Oberbegriff von Patentanspruch 1 sowie eine Gasturbine, insbesondere ein Flugtriebwerk mit einer solchen Leiteinrichtung.

Eine derartige Leiteinrichtung für eine Gasturbine ist der EP 2 554 794 A2 als bekannt zu entnehmen. Die Leiteinrichtung umfasst wenigstens ein Gehäuseelement sowie wenigstens ein in radialer Richtung innenseitig des Gehäuseelements angeordnetes, erstes Kanalsegment. Durch das erste Kanalsegment ist zumindest ein von einem Gas durchströmbarer Kanal in radialer Richtung nach außen wenigstens teilweise begrenzt. Die bekannte Leiteinrichtung umfasst ferner wenigstens ein in radialer Richtung innenseitig des ersten Kanalsegments angeordnetes, zweites Kanalsegment, durch welches der Kanal in radialer Richtung nach innen wenigstens teilweise begrenzt ist. Darüber hinaus umfasst die Leiteinrichtung wenigstens eine zumindest teilweise in dem Kanal angeordnete Leitschaufel, welche relativ zu dem Gehäuseelement und relativ zu den Kanalsegmenten um eine Drehachse drehbar ist. Der Kanal ist beispielsweise als Ringkanal oder Ringraum ausgebildet und dient zum Führen des Gases, das eine hohe Temperatur aufweisen und somit ein sogenanntes Heißgas sein kann. Die Leitschaufel dient zum Ablenken oder Umlenken des den Kanal durchströmenden Gases und ist zwischen wenigstens zwei voneinander unterschiedlichen Stellungen um die Drehachse drehbar. Sind beispielsweise mehrere, in Umfangsrichtung aufeinanderfolgend angeordnete und relativ zu dem Gehäuseelement und den Kanalsegmenten bewegbare, insbesondere drehbare, Leitschaufeln vorgesehen, so kann dadurch ein variables Leitgitter der Gasturbine geschaffen werden. Durch Drehen der Leitschaufeln können die Leitschaufeln und somit die Gasturbine insgesamt an unterschiedliche Betriebspunkte bedarfsgerecht angepasst werden, so dass sich ein effizienter Betrieb der Gasturbine realisieren lässt.

Die WO 2005/047656 A1 offenbart ein Leitschaufelgitter für eine Turbomaschine, insbesondere für eine Gasturbine, mit mehreren in einem Ringraum beziehungsweise einem Hauptströmungskanal positionierten, feststehenden Leitschaufeln. Die Leitschaufeln sind um jeweils eine Schwenkachse verstellbar ausgebildet und grenzen mit radial innenliegenden Enden an eine erste Begrenzungsfläche des Ringraums und mit radial außenliegenden Enden an eine zweite Begrenzungsfläche des Ringraums an. Dabei ist vorgesehen, dass die erste Begrenzungsfläche des Ringraums und/oder die zweite Begrenzungsfläche des Ringraums derart ausgestaltet ist, dass in jeder Schwenkposition der Leitschaufeln Spalte zwischen den radial innenliegenden Enden der Leitschaufeln und der ersten Begrenzungsfläche des Ringraums und/oder Spalte zwischen den radial außenliegenden Enden der Leitschaufeln und der zweiten Begrenzungsfläche des Ringraums minimiert sind.

Darüber hinaus offenbart die EP 0 757 161 A2 eine Halteanordnung einer Leitschaufel an einem Gehäuse eines Verdichters für eine Gasturbine, wobei die Leitschaufel über eine Buchse an dem Gehäuse gelagert ist. Die Buchse ist dabei zumindest teilweise in einer Bohrung des Gehäuses aufgenommen.

Des Weiteren offenbart die US 3 558 237 A eine Turbinenstufe mit einem Befestigungsring, weleher Lagermittel zum Koppeln verstellbarer Leitschaufeln mit dem Befestigungsring umfasst. Ferner umfasst die Turbinenstufe eine ringförmige Reihe von verstellbaren Leitschaufeln, welche mit dem Befestigungsring gekoppelt sind.

Aufgabe der vorliegenden Erfindung ist es, eine Leiteinrichtung der eingangs genannten Art sowie eine Gasturbine, insbesondere ein Flugtriebwerk mit einer solchen Leiteinrichtung zu schaffen, mittels welchen sich eine besonders einfache Montage der Leiteinrichtung sowie ein besonders effizienter Betrieb der Gasturbine realisieren lassen.

Diese Aufgabe wird durch eine Leiteinrichtung mit den Merkmalen des Patentanspruchs 1 sowie durch eine Gasturbine mit den Merkmalen des Patentanspruchs 12 gelöst. Vorteilhafte Ausgestaltungen mit zweckmäßigen Weiterbildungen der Erfindung sind in den übrigen Ansprüchen angegeben.

Eine solche Leiteinrichtung für eine Gasturbine, insbesondere für ein Flugtriebwerk, umfasst wenigstens ein Gehäuseelement, wenigstens ein in radialer Richtung innenseitig des Gehäuseelements angeordnetes, erstes Kanalsegment und wenigstens ein in radialer Richtung innenseitig des ersten Kanalsegments angeordnetes, zweites Kanalsegment. Durch das erste Kanalsegment ist zumindest ein von einem Gas durchströmbarer Kanal in radialer Richtung nach außen wenigstens teilweise begrenzt. Durch das zweite Kanalsegment ist der Kanal in radialer Richtung nach innen wenigstens teilweise begrenzt. Die Leiteinrichtung umfasst darüber hinaus wenigstens eine zumindest teilweise in dem Kanal angeordnete Leitschaufel, welche relativ zu dem Gehäuseelement und relativ zu den Kanalsegmenten um eine Drehachse drehbar ist.

Um nun eine besonders einfache Montage der Leiteinrichtung sowie einen besonders effizienten Betrieb der Gasturbine insgesamt realisieren zu können, ist es vorgesehen, dass das zweite Kanalsegment an der Leitschaufel befestigt und an dem Gehäuseelement über die Leitschaufel gehalten ist. Dabei ist die Leitschaufel an dem Gehäuseelement über eine Buchse gelagert, welche in radialer Richtung von außen nach innen in eine Durchgangsöffhung des Gehäuseelements eingesteckt ist.

Der Erfindung liegt die Erkenntnis zugrunde, dass bei üblichen Leiteinrichtungen große Spalte der Leitschaufel zum beispielsweise als Ringraum oder Ringkanal ausgebildeten Kanal, das heißt zwischen der Leitschaufel und den Kanalsegmenten vorgesehen werden. Diese großen Spalte werden üblicherweise aufgrund von hohen Temperaturunterschieden und daraus resultierenden, hohen Wärmedehnungen vorgesehen, um trotz dieser Wärmedehnungen eine Bewegbarkeit und somit Verstellbarkeit der Leitschaufel relativ zu dem Gehäuseelement und den Kanalsegmenten sicherzustellen. Diese üblicherweise vorgesehenen, großen Spalte beeinträchtigen jedoch einen effizienten Betrieb der Gasturbine, da die Spalte einen Wirkungsgradverlust zur Folge haben.

Bei der erfindungsgemäßen Leiteinrichtung ist es nun jedoch möglich, eine relativ zu den Kanalsegmenten bewegliche Leitschaufel einzusetzen und somit die Gasturbine, insbesondere ein Flugtriebwerk, an unterschiedliche Betriebspunkte effizient anpassen zu können und gleichzeitig besonders geringe und zumindest im Wesentlichen temperaturunabhängige Spalte der Leitschaufel relativ zum Kanal, das heißt zwischen der Leitschaufel und den Kanalsegmenten zu schaffen. Der Aufbau der erfindungsgemäßen Leiteinrichtung ermöglicht es nämlich, die prinzipiell auftretenden Temperaturdehnungen durch Biegen der Leitschaufel in Umfangsrichtung zu kompensieren. Dadurch können unerwünschte Strömungen vermieden oder zumindest gering gehalten werden, so dass zumindest ein überwiegender Teil des den Kanal durchströmenden Gases effektiv und effizient mittels der Leitschaufel auf gewünschte Weise abgelenkt beziehungsweise umgelenkt werden kann. Darüber hinaus kann ein besonders guter Dichteffekt insbesondere in einem radial äußeren Bereich des Kanals erzielt werden, so dass unerwünschte, den Wirkungsgrad der Gasturbine beeinträchtigende Strömungen zumindest gering gehalten werden können.

Außerdem ermöglicht der Aufbau der erfindungsgemäßen Leiteinrichtung eine besonders einfache Montage, so dass die Leiteinrichtung und die Gasturbine insgesamt auf besonders einfache, zeit- und kostengünstige Weise hergestellt werden können. Dies ist insbesondere möglich, da die Buchse in die Durchgangsöffnung des Gehäuseelements in radialer Richtung von außen nach innen eingesteckt werden kann und somit montierbar ist. Ferner ist es vorzugsweise vorgesehen, dass die Buchse hinsichtlich ihrer Dimensionen, insbesondere hinsichtlich ihrer in radialer Richtung der Gasturbine verlaufenden Erstreckung und/oder hinsichtlich ihrer Wandstärke derart ausgestaltet ist, dass bei demontierter Buchse ein vorgegebener, die Montage der Kanalsegmente und der Leitschaufel ermöglichender Bewegungsbereich, in welchem die Leitschaufel und die Kanalsegmente bewegbar sind, freigegeben ist. Mit anderen Worten ist die Buchse beispielsweise derart ausgestaltet, dass durch deren Fehlen ein für die Montage der Leitschaufel und der Kanalsegmente ausreichender Freiraum zur Verfügung steht. Beispielsweise kann die Buchse nach einem Anordnen und Bewegen der Kanalsegmente und der Leitschaufel in eine vorgebbare, gewünschte Montageposition in radialer Richtung von außen nach innen in die Durchgangsöffnung eingesteckt werden, wodurch die Leitschaufel und beispielsweise über diese die Kanalsegmente in der vorgebbaren Montageposition mittels der Buchse am Gehäuseelement festgelegt werden. Beispielsweise ist es möglich, im Rahmen der Montage der Leitschaufel und der Kanalsegmente die Leitschaufel zumindest ein Stück aus der Durchgangsöffnung und somit aus dem Gehäuseelement in radialer Richtung nach außen zu ziehen. Dies geht mit einem Bewegen zumindest des äußeren ersten Kanalsegments in radialer Richtung nach außen einher, so dass sich beispielsweise eine besonders einfache Montage des inneren zweiten Kanalsegments im Gehäuseelement realisieren lässt.

Zur Realisierung einer besonders einfachen Montage ist es vorgesehen, dass das erste Kanalsegment wenigstens eine von der Leitschaufel durchdrungene Durchgangsöffnung aufweist, über welche das erste Kanalsegment axial und in Umfangsrichtung relativ zum Gehäuseelement über die Leitschaufel und die Buchse gelagert ist.

Bei einer weiteren Ausführungsform weist das erste Kanalsegment wenigstens zwei in axialer Richtung voneinander beabstandete Nuten auf, über welche das erste Kanalsegment relativ zum Gehäuseelement gelagert ist. Hierdurch kann das erste Kanalsegment auf besonders einfache, zeit- und kostengünstige Weise am Gehäuseelement gehalten beziehungsweise montiert werden.

Eine weitere Ausführungsform zeichnet sich dadurch aus, dass die Buchse eine Wandstärke aufweist, welche größer ist als die in eine der Nuten hineinragende Länge zumindest einer der Laschen des ersten Kanalsegments. Somit kann die zumindest eine Lasche einfach in die korrespondierende Nut eingesteckt werden.

In vorteilhafter Ausgestaltung der Erfindung überragt die Buchse zumindest einen an die Buchse angrenzenden Wandungsbereich des Gehäuseelements in radialer Richtung nach innen. Hierdurch lässt sich eine besonders stabile Lagerung der Leitschaufel über die Buchse an dem Gehäuseelement realisieren. Darüber hinaus kann dadurch ein besonders großer Bewegungsbereich realisiert werden, welcher bei demontierter Buchse freigegeben ist und für die Montage der Leitschaufel und der Kanalsegmente zur Verfügung steht.

Um eine besonders einfache Montage der Leiteinrichtung zu realisieren, ist es bei einer weiteren Ausführungsform der Erfindung vorgesehen, dass die Leitschaufel wenigstens ein zumindest teilweise in einer korrespondierenden Aufnahmeöffnung des zweiten Kanalsegments aufgenommenes Verbindungselement, insbesondere einen Zapfen, aufweist, über welches die Leitschaufel mit dem zweiten Kanalsegment verbunden ist, wobei die den an die Buchse angrenzenden Wandungsbereich überragende Länge der Buchse größer ist als die in die Aufnahmeöffnung hineinragende Länge des Verbindungselements.

Schließlich hat es sich zur Realisierung einer besonders einfachen Montage als vorteilhaft gezeigt, wenn radial zwischen dem ersten Kanalsegment und dem Gehäuseelement ein Freiraum vorgesehen ist, welcher zumindest in radialer Richtung größer ist als die in die Aufnahmeöffnung hineinragende Länge des Verbindungselements.

Eine weitere Ausführungsform zeichnet sich dadurch aus, dass die Leitschaufel über ein an der Leitschaufel vorgesehenes und zumindest teilweise in der Buchse und zumindest teilweise in der Durchgangsöffnung des Gehäuseelements aufgenommenes Lagerelement an der Buchse gelagert ist. Das Lagerelement ist beispielsweise als Stift oder Zapfen ausgebildet und weist eine Außenkontur auf, welche zumindest im Wesentlichen der Form eines geraden Kreiszylinders entspricht. Hierdurch kann eine besonders einfache Montage und eine besonders vorteilhafte Lagerung der Leitschaufel an der Buchse realisiert werden. Vorzugsweise ist es dabei vorgesehen, dass der Bewegungsbereich bei demontierter Buchse bei zumindest teilweise in der Durchgangsöffnung aufgenommenem Lagerelement freigegeben ist. Dies bedeutet, dass das Lagerelement bei demontierter Buchse zumindest teilweise in der Durchgangsöffnung aufgenommen ist, wobei der für die Montage ausreichende Freiraum, in welchem die Leitschaufel und die Kanalsegmente bewegt werden können, zur Verfügung steht.

In besonders vorteilhafter Ausgestaltung der Erfindung ist an dem zweiten Kanalsegment auf einer in radialer Richtung nach innen weisenden Seite des zweiten Kanalsegments wenigstens ein Dichtungselement, insbesondere ein Dichtring, gehalten. Dem inneren zweiten Kanalsegment kommt somit eine Doppelfunktion zu. Einerseits dient das zweite Kanalsegment zum Begrenzen des Kanals. Andererseits dient das innere zweite Kanalsegment zum Halten des Dichtrings. Dadurch können zusätzliche und separate Befestigungselemente vermieden werden, so dass sich eine besonders einfache Montage, eine geringe Teilanzahl und ein geringes Gewicht der Leiteinrichtung realisieren lassen. Mittels des Dichtrings ist beispielsweise das zweite Kanalsegment gegen ein Rotorelement, insbesondere eine Laufscheibe, eines um eine Drehachse relativ zu dem Gehäuseelement drehbaren Rotors der Gasturbine abdichtbar, wobei die Drehachse des Rotors in axialer Richtung der Gasturbine verläuft.

Auch der Leitschaufel kommt eine Doppelfunktion zu, da sie einerseits zum Ablenken des den Kanal durchströmenden Gases und andererseits zum Befestigen beziehungsweise Halten des inneren zweiten Kanalsegments dient. Zusätzliche beziehungsweise separate Halteelemente zum Halten und Befestigen des inneren zweiten Kanalsegments können somit vermieden werden, so dass sich eine besonders geringe Teileanzahl und eine besonders einfache, zeit- und kostengünstige Montage der Leiteinrichtung realisieren lässt.
Zur Realisierung einer besonders vorteilhaften Dichtwirkung ist es bei einer weiteren Ausfüthrungsform der Erfindung vorgesehen, dass das Dichtungselement über eine Speichenzentrierung an einem zweiten Kanalsegment gehalten ist. Hierdurch lässt sich auch eine besonders präzise Positionierung des Dichtungselements realisieren, so dass eine besonders gute Dichtwirkung geschaffen werden kann. Durch die Speichenzentrierung des Dichtungselements, insbesondere des Dichtrings, wird die Dichtwirkung des Dichtungselements zur Laufscheibe hin nicht beeinträchtigt. Dieses Konzept ermöglicht die Darstellung eines besonders hohen Wirkungsgrads der Gasturbine. Vorzugsweise ist der Dichtring als in Umfangsrichtung vollständig umlaufender, das heißt geschlossener Ring ausgebildet.

Als besonders vorteilhaft hat es sich gezeigt, wenn das Gehäuseelement zumindest in dessen Umfangsrichtung ungeteilt ausgebildet ist. Mit anderen Worten ist das Gehäuseelement zumindest in dessen Umfangsrichtung einstückig beziehungsweise einteilig ausgebildet. Hierdurch können die Teileanzahl und der Montageaufwand der Gasturbine insgesamt besonders gering gehalten werden. Gleichzeitig können die Leitschaufel und die Kanalsegmente besonders einfach in das als ungeteilte Gehäuse ausgebildete Gehäuseelement montiert werden. Das Gehäuseelement ist beispielsweise als in Umfangsrichtung geschlossenes Ringelement und somit in Umfangsrichtung einteilig ausgebildet.

Im Gegensatz dazu ist vorzugsweise eine segmentierte Bauweise des Kanals vorgesehen. Dies bedeutet, dass beispielsweise eine Mehrzahl von in Umfangsrichtung aufeinanderfolgenden ersten Kanalsegmenten vorgesehen ist, wobei die ersten Kanalsegmente den Kanal in radialer Richtung nach außen jeweils teilweise begrenzen. Alternativ oder zusätzlich ist auch eine Mehrzahl von in Umfangsrichtung aufeinanderfolgend angeordneten zweiten Kanalsegmenten vorgesehen, durch welche der Kanal in radialer Richtung nach innen begrenzt ist. Durch diese segmentierte Bauweise können die Kanalsegmente, welche beispielsweise über Nuten und Dichtungselemente, insbesondere Dichtbleche, dichtend miteinander verbunden sind, temperaturbedingte Bewegungen relativ zueinander ausführen und somit frei atmen, das heißt ihren Durchmesser innerhalb gewisser Grenzen verkleinern oder vergrößern. Hierdurch können übermäßige Wärmedehnungen der Leitschaufel zum Kanal vermieden werden. Die Position der bewegbaren Leitschaufel wird dabei über die Buchse am Gehäuseelement festgelegt, so dass beispielsweise die temperaturbedingten Bewegungen der Kanalsegmente relativ zueinander die gewünschte Position der Buchse nicht übermäßig beeinträchtigt. Durch diese segmentierte Bauweise können übermäßige thermische Spannungen zwischen den einzelnen Kanalsegmenten vermieden werden.

Eine weitere Ausführungsform zeichnet sich dadurch aus, dass das Gehäuseelement, die Leitschaufel und die Kanalsegmente als separat voneinander ausgebildete und zumindest mittelbar miteinander verbundene Bauteile ausgebildet sind. Hierdurch können übermäßige thermische Spannungen zwischen der Leitschaufel, dem Gehäuseelement und den Kanalsegmenten vermieden werden, da sich die Bauteile relativ zueinander bewegen können.

Ein weiterer Aspekt der Erfindung betrifft eine Gasturbine, insbesondere ein Flugtriebwerk, mit wenigstens einer im Vorhergehenden beschriebenen Leiteinrichtung. Vorteilhafte Ausgestaltungen der erfindungsgemäßen Leiteinrichtung sind als vorteilhafte Ausgestaltungen der erfindungsgemäßen Gasturbine anzusehen und umgekehrt.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Es zeigen:

- Fig. 1: ausschnittsweise eine schematische Längsschnittansicht einer Leiteinrichtung für eine Gasturbine, mit wenigstens einem Gehäuseelement, mit wenigstens einem ersten Kanalsegment, mit wenigstens einem zweiten Kanalsegment und mit wenigstens einer Leitschaufel, welche über eine Buchse an dem Gehäuseelement gelagert ist, wobei das zweite Kanalsegment an der Leitschaufel befestigt und über diese am Gehäuseelement gehalten ist;
- Fig. 2: eine schematische Perspektivansicht der Leiteinrichtung; und
- Fig. 3: eine weitere schematische Perspektivansicht der Leiteinrichtung.

In den Figuren sind gleiche oder funktionsgleiche Elemente mit gleichen Bezugszeichen versehen.

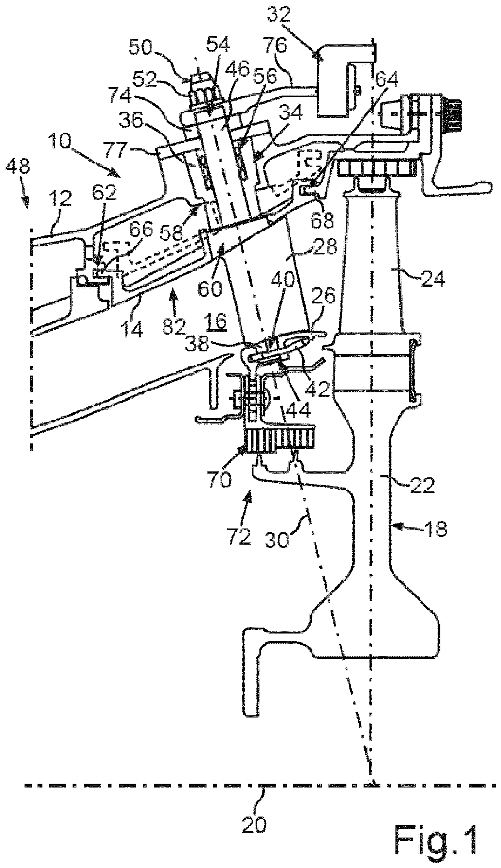

Fig. 1 zeigt eine im Ganzen mit 10 bezeichnete Leiteinrichtung für eine Gasturbine. Die Leiteinrichtung 10 umfasst wenigstens ein Gehäuseelement 12, welches beispielsweise in Umfangsrichtung der Gasturbine und somit des Gehäuseelements 12 einteilig, das heißt einstückig ausgebildet ist. Hierbei ist das Gehäuseelement 12 beispielsweise als in Umfangsrichtung vollständig umlaufender, das heißt geschlossener Ring ausgebildet. Die Leiteinrichtung 10 umfasst darüber hinaus eine Mehrzahl von in radialer Richtung des Gehäuseelements 12 beziehungsweise der Gasturbine innenseitige des Gehäuseelements 12 angeordnete, erste Kanalsegmente, von denen in Fig. 1 ein mit 14 bezeichnetes Kanalsegment erkennbar ist. Die mehreren ersten Kanalsegmente sind in Umfangsrichtung aufeinanderfolgend angeordnet. Die folgenden Ausführungen zum ersten Kanalsegment 14 können ohne weiteres auch auf die anderen ersten Kanalsegmente übertragen werden.

Aus Fig. 1 ist erkennbar, dass das äußere erste Kanalsegment 14 zumindest teilweise und zumindest überwiegend in radialer Richtung nach innen hin von dem Gehäuseelement 12 beabstandet ist. Darüber hinaus ist durch das äußere erste Kanalsegment 14 zumindest ein von einem Gas durchströmbarer Kanal 16 in radialer Richtung nach außen wenigstens teilweise begrenzt. Das Gas weist eine hohe Temperatur auf und ist somit ein Heißgas und wird über den Kanal 16 zu wenigstens einem Rotor 18 der Gasturbine geführt. Der Rotor 18 ist um eine Drehachse 20 relativ zum Gehäuseelement 12 drehbar und umfasst eine Laufscheibe 22 und eine Mehrzahl von Laufradschaufeln, von denen in Fig. 1 eine mit 24 bezeichnete Laufradschaufel erkennbar ist. Die Drehachse 20 erstreckt sich dabei in axialer Richtung der Gasturbine und somit des Gehäuseelements 12.

Darüber hinaus umfasst die Leiteinrichtung 10 wenigstens ein in radialer Richtung innenseitig des ersten Kanalsegments 14 angeordnetes, zweites Kanalsegment 26. Das innere zweite Kanalsegment 26 kann als in Umfangsrichtung vollständig umlaufender, das heißt geschlossener Ring ausgebildet sein. Alternativ dazu ist eine Mehrzahl von inneren zweiten Kanalsegmenten vorgesehen, welche in Umfangsrichtung aufeinanderfolgend angeordnet sind. Hierbei ist das Kanalsegment 26 eines der mehreren zweiten Kanalsegmente. Somit können die folgenden Ausführungen zum zweiten Kanalsegment 26 ohne weiteres auch auf die anderen, gegebenenfalls vorgesehenen zweiten Kanalsegmente übertragen werden.

Der Kanal 16 ist in radialer Richtung nach innen zumindest teilweise durch das zweite Kanalsegment 26 begrenzt. Dies bedeutet, dass eine segmentierte Bauweise des Kanals 16 vorgesehen ist, da dieser in radialer Richtung nach außen hin durch die mehreren ersten Kanalsegmente und in radialer Richtung nach innen durch die zweiten Kanalsegmente begrenzt wird. Die Leiteinrichtung 10 umfasst darüber hinaus eine Mehrzahl von Leitschaufeln, welche in Umfangsrichtung aufeinanderfolgend angeordnet sind. Von diesen mehreren Leitschaufeln ist in Fig. 1 eine mit 28 bezeichnete Leitschaufel erkennbar. Die folgenden Ausführungen zur Leitschaufel 28 können ohne weiteres auch auf die anderen Leitschaufeln übertragen werden. Die Leitschaufel 28 ist zumindest teilweise in dem Kanal 16 angeordnet und relativ zu dem Gehäuseelement 12 sowie relativ zu den Kanalsegmenten 14, 26 um eine Drehachse 30 drehbar. Aus Fig. 1 ist erkennbar, dass die Drehachse 30 schräg zur Drehachse 20 des Rotors 18 verläuft.

Durch die mehreren Leitschaufeln ist ein variables Turbinenleitgitter geschaffen, mittels welchem das den Kanal 16 durchströmende Gas bedarfsgerecht abgelenkt werden kann. Das Turbinenleitgitter, das heißt die Leitschaufel 28 ist in Strömungsrichtung des Gases durch den Kanal stromauf der Laufradschaufel 24 angeordnet, so dass das den Kanal 16 durchströmende Gas stromauf der Laufradschaufel 24 mittels der Leitschaufel 28 abgelenkt beziehungsweise umgelenkt werden kann. Dadurch kann das mittels der Leitschaufel 28 abgelenkte Gas die Laufradschaufel 24 in einem Strömungswinkel anströmen, mittels welchem ein besonders effizienter und wirkungsgradgünstiger Betrieb der Gasturbine realisierbar ist. Durch Drehen der Leitschaufel 28 um die Drehachse 30 kann der Anströmwinkel variiert werden, so dass dadurch das Turbinenleitgitter und somit die Gasturbine insgesamt bedarfsgerecht an unterschiedliche Betriebspunkte angepasst werden kann.

Hierzu ist die Leitschaufel 28 über eine Koppeleinrichtung 32 mit wenigstens einem Aktor gekoppelt, mittels welchem die Leitschaufel 28 über die Koppeleinrichtung 32 um die Drehachse 30 relativ zu dem Gehäuseelement 12 gedreht werden kann. Dadurch kann die Leitschaufel 28 beispielsweise zwischen zumindest zwei voneinander unterschiedlichen Stellungen verstellt werden. Der Kanal 16 ist beispielsweise als Ringkanal oder Ringraum ausgebildet, so dass die Kanalsegmente 14, 26 auch als Ringraumsegmente bezeichnet werden. Dabei sind die einzelnen Ringraumsegmente, das heißt beispielsweise die mehreren ersten Kanalsegmente und/oder die mehreren zweiten Kanalsegmente über Nuten und Dichtungselemente, insbesondere in Form von Dichtblechen, dichtend miteinander verbunden. Durch die Segmentierung des Kanals 16 können Wärmedehnungen an den jeweiligen Leitschaufeln zum Ringraum vermieden oder zumindest gering gehalten werden.

Um nun eine besonders einfache Montage der Leiteinrichtung 10 und der Gasturbine insgesamt sowie einen besonders effizienten Betrieb der Gasturbine zu realisieren, ist das zweite Kanalsegment 26 an der Leitschaufel 28 befestigt und an dem Gehäuseelement 12 über die Leitschaufel 28 gehalten. Dabei ist die Leitschaufel an dem Gehäuseelement 12 über eine in radialer Richtung von außen nach innen in eine Durchgangsöffnung 34 des Gehäuseelements 12 eingesteckte Buchse 36 gelagert.

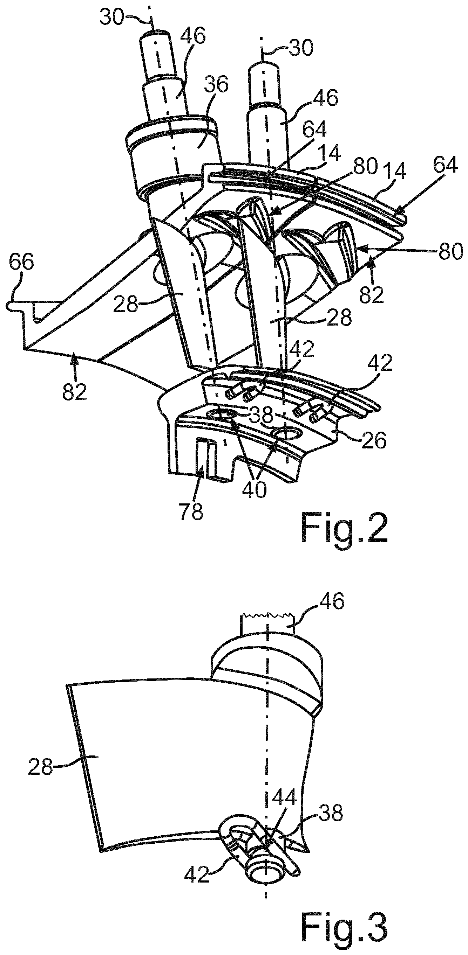

Aus Fig. 1 ist erkennbar, dass die Leitschaufel 28 ein Verbindungselement in Form eines Zapfens 38 aufweist, welcher zumindest teilweise in einer korrespondierenden und vorliegend als Durchgangsöffnung ausgebildeten Aufnahmeöffnung 40 des zweiten Kanalsegments 26 aufgenommen ist. Über den Zapfen 38 ist die Leitschaufel 28 über wenigstens ein Befestigungselement in Form eines Stiftes 42 mit dem zweiten Kanalsegment 26 verbunden, wobei der Stift 42 vorliegend U-förmig ausgebildet ist. Dies bedeutet, dass das zweite Kanalsegment 26 mittels des U-förmigen Stifts 42 an der Leitschaufel 28 über deren Zapfen 38 befestigt ist. Wie in Zusammenschau mit Fig. 2 und 3 erkennbar ist, ist der Stift 42 in korrespondierende und in Umfangsrichtung des Gehäuseelements 12 voneinander beabstandete Aufnahmeöffnungen des zweiten Kanalsegments 26 eingesteckt und greift in eine vollständig umlaufende Nut 44 des Zapfens 38 ein. Hierdurch wirkt der Stift 42 formschlüssig sowohl mit dem zweiten Kanalsegment 26 als auch mit der Leitschaufel 28 zusammen, so dass das zweite Kanalsegment 26 zumindest formschlüssig und zumindest radial über den Stift 42 an der Leitschaufel 28 gehalten ist.

Die Leitschaufel 28 weist ferner ein Lagerelement in Form eines Zapfens 46 auf. Der Zapfen 46 ist ein Stabelement und weist eine Außenkontur auf, welche eine Form hat, die zumindest im Wesentlichen einer Form eines geraden Kreiszylinders entspricht. Der Zapfen 46 ist zumindest teilweise in der Buchse 36 aufgenommen. Ferner ist der Zapfen 46 zumindest teilweise in der Durchgangsöffnung 34 des Gehäuseelements 12 aufgenommen. Aus Fig. 1 ist erkennbar, dass der Zapfen 46 sowohl die Buchse 36 als auch die Durchgangsöffnung 34 durchdringt und somit auf einer Außenseite 48 des Gehäuseelements 12 dieses in radialer Richtung nach außen überragt.

In einem außenseitig des Gehäuseelements 12, das heißt auf der Außenseite 48 angeordneten Teilbereich weist der Zapfen 46 ein Außengewinde 50 auf, auf welches eine Mutter 52 aufgeschraubt ist. Mittels der Mutter 52 ist die Leitschaufel 28 in Radialer Richtung gesichert und mit der Koppeleinrichtung 32 verbunden. In einem weiteren Teilbereich 54 weist der Zapfen 46 eine unrunde Außenkontur, beispielsweise eine vieleckige, insbesondere viereckige, Außenkontur auf, über welche der Zapfen 46 drehfest mit der Koppeleinrichtung 32 verbunden ist. Dadurch können Drehmomente zwischen dem Zapfen 46 und der Koppeleinrichtung 32 übertragen werden, so dass dadurch die Leitschaufel 28 gedreht werden kann. Darüber hinaus ist ein Dichtungselement in Form einer Stopfdichtung 56 vorgesehen, welche in radialer Richtung der Buchse 36 zwischen dieser und dem Zapfen 46 angeordnet ist.

Die Buchse 36 überragt zumindest einen an die Buchse angrenzenden Wandungsbereich 58 des Gehäuseelements 12 in radialer Richtung nach innen hin. Dabei ist es vorzugsweise vorgesehen, dass die in radialer Richtung von außen montierbare Buchse 36 das Gehäuseelement 12 in radialer Richtung nach innen hin soweit überragt und eine solch große Wandstärke aufweist, dass bei demontierter Buchse 36 genügend Freiraum für die Montage der Kanalsegmente 14,26 und der Leitschaufel 28 zur Verfügung steht. In Fig. 1 ist durch gestrichelte Linien eine Montageposition des ersten Kanalsegments 14 veranschaulicht, die das erste Kanalsegment 14 bei demontierter Buchse 36 einnehmen kann. Dies bedeutet, dass das erste Kanalsegment 14 in die Montageposition bewegt wird, wenn die Leitschaufel 28 montiert wird.

Das erste Kanalsegment 14 weist eine Durchgangsöffnung 60 auf, welche von der Leitschaufel 28 durchdrungen ist. Hierdurch kann das Kanalsegment 14 in axialer Richtung und in Umfangsrichtung relativ zum Gehäuseelement 12 über die Leitschaufel 28 und die Buchse 36 festgelegt werden. Darüber hinaus ist das erste Kanalsegment 14 über wenigstens eine vordere Nut 62 und über wenigstens eine hintere Nut 64 am Gehäuseelement 12 radial festgelegt. Die vordere Nut 62 ist dabei am Gehäuseelement 12 vorgesehen, wobei eine Lasche 66 des ersten Kanalsegments 14 zumindest teilweise in die vordere Nut 62 eingreift. Die hintere Nut 64 ist am ersten Kanalsegment 14 vorgesehen, wobei eine am Gehäuseelement 12 vorgesehene Lasche 68 in die hintere Nut 64 eingreift.

Darüber hinaus umfasst die Leiteinrichtung 10 ein Dichtungselement in Form eines Dichtrings 70, welcher an dem zweiten Kanalsegment 26 auf einer in radialer Richtung nach innen weisenden Seite 72 des zweiten Kanalsegments 26 befestigt ist. Dies bedeutet, dass der beispielsweise in Umfangsrichtung des Gehäuseelements 12 vollständig umlaufende, das heißt geschlossene Dichtring 70 an den jeweiligen zweiten Kanalsegmenten befestigt ist, so dass keine zusätzlichen Befestigungselemente zum Halten und Befestigen des Dichtrings 70 vorgesehen und erforderlich sind. Mittels des Dichtrings 70 ist das zweite Kanalsegment 26 gegen die Laufscheibe 22 abgedichtet.

Insgesamt ist erkennbar, dass das Gehäuseelement 12, die Leitschaufel 28 und die Kanalsegmente 14, 26 als separat voneinander hergestellte und zumindest mittelbar miteinander verbundene Bauteile ausgebildete sind, wobei die Leitschaufel 28 und die Kanalsegmente 14, 26 zusammen mit dem Dichtring 70 einen Bauteilverbund bilden, welcher über die Leitschaufel 28 und die Buchse 36 am Gehäuseelement 12 gehalten und an diesem aufgehängt ist. Darüber hinaus ist in Fig. 1 eine Abstimmscheibe 74 vorgesehen, welche zwischen einem Hebelarm 76 der Koppeleinrichtung 32 und einem Deckel 77 angeordnet ist.

Zur Realisierung einer vorteilhaften Halterung und Zentrierung des Dichtrings 70 ist vorgesehen, dass der Dichtring 70 über eine Speichenzentrierung an dem zweiten Kanalsegment 26 gehalten ist. In Fig. 2 ist dabei eine an dem zweiten Kanalsegment 26 vorgesehene Nut 78 für die Speichenzentrierung des Dichtrings 70 erkennbar. Ferner sind in Fig. 2 zwei der ersten Kanalsegmente erkennbar, welche in Umfangsrichtung des Gehäuseelements 12 aufeinanderfolgend angeordnet sind. Am jeweiligen ersten Kanalsegment 14 ist eine Ringraum-Konturierung 80 vorgesehen, welche auf einer in radialer Richtung nach innen weisenden und den Kanal 16 begrenzenden Seite 82 des jeweiligen ersten Kanalsegments 14 angeordnet ist. Mittels der Ringraum-Konturierung 80 kann ein Spalt zwischen der Leitschaufel 28 und dem jeweiligen ersten Kanalsegment 14 in unterschiedlichen Stellungen der Leitschaufel 28 zumindest im Wesentlichen konstant gehalten werden.

Vorzugsweise ist zwischen der Leitschaufel 28 und dem ersten Kanalsegment 14 und/oder zwischen der Leitschaufel 28 und dem zweiten Kanalsegment 26 eine enge und insbesondere dichtende Passung vorgesehen, die zwar eine Drehung der Leitschaufel 28 relativ zu den Kanalsegmenten 14, 26 erlaubt, ansonsten aber das jeweilige Kanalsegment 14 und/oder 26 in axialer Richtung und in Umfangsrichtung festlegt.

Das als Ringraumsegment ausgebildete Kanalsegment 14 ist verdrehsicher am Gehäuseelement 12 gehalten, wobei es zudem in radialer Richtung am Gehäuseelement 12 festgelegt ist und somit zusammen mit dem Gehäuseelement 12 bei thermischen Ausdehnung atmen, das heißt sich bewegen kann. Gegenüber einer einstückigen Ausbildung des Gehäuseelements 12 mit den Kanalsegmenten 14,26 hat die Ausgestaltung des Gehäuseelements 12 und der Kanalsegmente 14, 26 als voneinander separat ausgebildete Bauteile den Vorteil, dass übermäßige thermische Spannungen vermieden werden können.

Das erste Kanalsegment 14 wird dabei vorzugsweise, so wie bei der in den Figuren gezeigten Ausführungsform, in axialer Richtung und in Umfangsrichtung im Wesentlichen über die Leitschaufel 28 und die Buchse 36 relativ zu dem Gehäuseelement 12 lagefixiert, wohingegen eine örtliche Festlegung des ersten Kanalsegments 14 in radialer Richtung relativ zu dem Gehäuseelement 12 im Wesentlichen durch die beiden Nuten 62, 64 erfolgt. Durch diese Art der Befestigung des ersten Kanalsegments 14 an dem Gehäuseelement 12 und durch die speichenzentrierte Aufhängung des Dichtrings 70 an dem zweiten Kanalsegment 26 wird ein im Wesentlichen spannungsfreier und spaltarmer Betrieb der Leiteinrichtung 10 ermöglicht. Auf diese Weise können sich die Bauteilabschnitte der Leiteinrichtung 10, die in den unmittelbaren Kontakten mit dem Heißgas im Kanal 16 gelangen beziehungsweise stehen, nämlich die Leitschaufel 28, das erste Kanalsegment 14 und das zweite Kanalsegment 26, ausdehnen, ohne Spannungen in das Gehäuseelement 12 und/oder den Dichtring 70 einzubringen.

Wie zuvor bereits beschrieben, bilden das erste Kanalsegment 14 und das zweite Kanalsegment 26 dabei vorzugsweise keinen geschlossenen Ring in Umfangsrichtung, sondern lediglich Kreisringsegmente. Dies ermöglicht es den Segmenten zusammen mit dem Gehäuseelement 12 bei thermischen Ausdehnungen zu atmen. In Umfangsrichtung können dabei zwischen zueinander benachbarten ersten Kanalsegmenten 14 und/oder zwischen zueinander benachbarten zweiten Kanalsegmenten 26 in den Figuren nicht dargestellte Dichtbleche vorgesehen sein, die eine Dichtigkeit des Kanals 16 in radialer Richtung beim Atmen sicherstellen.

Zudem sei angemerkt, dass - wie in Fig. 2 dargestellt - jeweils einem ersten Kanalsegment 14 jeweils eine oder mehrere Leitschaufeln 28 zugeordnet sein können, und einem zweiten Kanalsegment 26 mehrere - in dem dargestellten Ausführungsbeispiel zwei - Leitschaufeln zugeordnet sein können.

### Bezugszeichenliste

- 10: Leiteinrichtung
- 12: Gehäuseelement
- 14: erstes Kanalsegment
- 16: Kanal
- 18: Rotor
- 20: Drehachse
- 22: Laufscheibe
- 24: Laufradschaufel
- 26: zweites Kanalsegment
- 28: Leitschaufel
- 30: Drehachse
- 32: Koppeleinrichtung
- 34: Durchgangsöffnung
- 36: Buchse
- 38: Zapfen
- 40: Durchgangsöffnung
- 42: Stift
- 44: Nut
- 46: Zapfen
- 48: Außenseite
- 50: Außengewinde
- 52: Mutter
- 54: Teilbereich
- 56: Stopfdichtung
- 58: Wandungsbereich
- 60: Durchgangsöffnung
- 62: vordere Nut
- 64: hintere Nut
- 66: Lasche
- 68: Lasche
- 70: Dichtring
- 72: Seite
- 74: Abstimmscheibe
- 76: Hebelelement
- 77: Deckel
- 78: Nut
- 80: Ringraum-Konturierung
- 82: Seite

## Patentansprüche

1. Leiteinrichtung (10) für eine Gasturbine, insbesondere für ein Flugtriebwerk, mit wenigstens einem Gehäuseelement (12), mit wenigstens einem in radialer Richtung innenseitig des Gehäuseelements (12) angeordneten, ersten Kanalsegment (14), durch welches zumindest ein von einem Gas durchströmbarer Kanal (16) in radialer Richtung nach außen wenigstens teilweise begrenzt ist, mit wenigstens einem in radialer Richtung innenseitig des ersten Kanalsegments (14) angeordneten, zweiten Kanalsegment (26), durch welches der Kanal (16) in radialer Richtung nach innen wenigstens teilweise begrenzt ist, und mit wenigstens einer zumindest teilweise in dem Kanal (16) angeordneten Leitschaufel (28), welche relativ zu dem Gehäuseelement (12) und relativ zu den Kanalsegmenten (14, 26) um eine Drehachse (30) drehbar ist, wobei das zweite Kanalsegment (26) an der Leitschaufel (28) befestigt und an dem Gehäuseelement (12) über die Leitschaufel (28) gehalten ist, welche an dem Gehäuseelement (12) über eine in radialer Richtung von außen nach innen in eine Durchgangsöffnung (34) des Gehäuseelements (12) eingesteckte Buchse (36) gelagert ist,
**dadurch gekennzeichnet, dass**
das erste Kanalsegment (14) wenigstens eine von der Leitschaufel (28) durchdrungene Durchgangsöfnung (60) aufweist, über welche das erste Kanalsegment (14) axial und in Umfangsrichtung relativ zum Gehäuseelement (12) über die Leitschaufel (28) und die Buchse (36) gelagert ist.

2. Leiteinrichtung (10) nach Anspruch 1,
**dadurch gekennzeichnet, dass**
das erste Kanalsegment (14) über wenigstens zwei in axialer Richtung voneinander beabstandete Nuten (62, 64) relativ zum Gehäuseelement (12) gelagert ist.

3. Leiteinrichtung (10) nach Anspruch 2,
**dadurch gekennzeichnet, dass**
die Buchse (36) eine Wandstärke aufweist, welche größer ist als die in eine der Nuten (62, 64) hineinragende Länge zumindest einer der Laschen (66, 68) des ersten Kanalsegments (14).

4. Leiteinrichtung (10) nach einem der vorhergehenden Ansprüche,
**dadurch gekennzeichnet, dass**
die Buchse (36) zumindest einen an die Buchse (36) angrenzenden Wandungsbereich (58) des Gehäuseelements (12) in radialer Richtung nach innen überragt.

5. Leiteinrichtung (10) nach Anspruch 4,
**dadurch gekennzeichnet, dass**
die Leitschaufel (28) wenigstens ein zumindest teilweise in einer korrespondierenden Aufnahmeöffnung (40) des zweiten Kanalsegments (26) aufgenommenes Verbindungselement (38), insbesondere einen Zapfen, aufweist, über welches die Leitschaufel (28) mit dem zweiten Kanalsegment (26) verbunden ist, wobei die den an die Buchse (36) angrenzenden Wandungsbereich (58) überragende Länge der Buchse (36) größer ist als die in die Aufnahmeöffnung (40) hineinragende Länge des Verbindungselements (38).

6. Leiteinrichtung nach Anspruch 5,
**dadurch gekennzeichnet, dass**
radial zwischen dem ersten Kanalsegment (14) und dem Gehäuseelement (12) ein Freiraum vorgesehen ist, welcher zumindest in radialer Richtung größer ist als die in die Aufnahmeöffnung (40) hineinragende Länge des Verbindungselements (38).

7. Leiteinrichtung (10) nach einem der vorhergehenden Ansprüche,
**dadurch gekennzeichnet, dass**
die Leitschaufel (28) über ein an der Leitschaufel (28) vorgesehenes und zumindest teilweise in der Buchse (36) und zumindest teilweise in der Durchgangsöffnung (34) des Gehäuseelements (12) aufgenommenes Lagerelement (46) an der Buchse (36) gelagert ist.

8. Leiteinrichtung (10) nach einem der vorhergehenden Ansprüche,
**dadurch gekennzeichnet, dass**
an dem zweiten Kanalsegment (26) auf einer in radialer Richtung nach innen weisenden Seite (72) des zweiten Kanalsegments (26) wenigstens ein Dichtungselement, insbesondere ein Dichtring (70), gehalten ist.

9. Leiteinrichtung (10) nach Anspruch 8,
**dadurch gekennzeichnet, dass**
das Dichtungselement über eine Speichenzentrierung an dem zweiten Kanalsegment (26) gehalten ist.

10. Leiteinrichtung (10) nach einem der vorhergehenden Ansprüche,
**dadurch gekennzeichnet, dass**
das Gehäuseelement (12) zumindest in dessen Umfangsrichtung ungeteilt ausgebildet ist.

11. Leiteinrichtung (10) nach einem der vorhergehenden Ansprüche,
**dadurch gekennzeichnet, dass**
das Gehäuseelement (12), die Leitschaufel (28) und die Kanalsegmente (14, 26) als separat voneinander ausgebildete und zumindest mittelbar miteinander verbundene Bauteile ausgebildet sind.

12. Gasturbine, insbesondere Flugtriebwerk, mit wenigstens einer Leiteinrichtung (10) nach einem der vorhergehenden Ansprüche.

## Claims

1. Guide device (10) for a gas turbine, in particular for an aircraft engine, comprising at least one housing element (12), comprising at least one first duct segment (14) which is arranged radially inside the housing element (12) and by means of which at least one duct (16) through which a gas can flow is delimited radially outwards at least in part, comprising at least one second duct segment (26) which is arranged radially inside the first duct segment (14) and by means of which the duct (16) is delimited radially inwards at least in part, and comprising at least one guide vane (28) that is arranged at least in part in the duct (16), which guide vane can be rotated about a rotational axis (30) relative to the housing element (12) and relative to the duct segments (14, 26), the second duct segment (26) being fastened to the guide vane (28) and being held on the housing element (12) by means of the guide vane (28), which is mounted on the housing element (12) by means of a bushing (36) that is inserted inwards from the outside in the radial direction into a through-opening (34) of the housing element (12), **characterized in that** the first duct segment (14) has at least one through-opening (60) through which the guide vane (28) has passed, by means of which through-opening the first duct segment (14) is mounted axially and in the circumferential direction relative to the housing element (12) by means of the guide vane (28) and the bushing (36).

2. Guide device (10) according to claim 1, **characterized in that** the first duct segment (14) is mounted relative to the housing element (12) by means of at least two grooves (62, 64) that are axially spaced apart from one another.

3. Guide device (10) according to claim 2, **characterized in that** the bushing (36) has a wall thickness that is greater than the length of at least one of the tabs (66, 68) of the first duct segment (14), which length projects into one of the grooves (62, 64).

4. Guide device (10) according to any of the preceding claims, **characterized in that** the bushing (36) projects radially inwards over at least one wall region (58) of the housing element (12) that adjoins the bushing (26).

5. Guide device (10) according to claim 4, **characterized in that** the guide vane (28) has at least one connection element (38), in particular a pin, that is received at least in part in a corresponding receiving opening (40) in the second duct segment (26), by means of which connection element the guide vane (28) is connected to the second duct segment (26), the length of the bushing (36) that projects over the wall region (58) adjoining the bushing (36) being greater than the length of the connection element (38) that projects into the receiving opening (40).

6. Guide device according to claim 5, **characterized in that** a space is provided radially between the first duct segment (14) and the housing element (12), which space is bigger at least in the radial direction than the length of the connection element (38) that projects into the receiving opening (40).

7. Guide device (10) according to any of the preceding claims, **characterized in that** the guide vane (28) is mounted on the bushing (36) by means of a mounting element (46) that is provided on the guide vane (28) and is received at least in part in the bushing (36) and at least in part in the through-opening (34) of the housing element (12).

8. Guide device (10) according to any of the preceding claims, **characterized in that** at least one sealing element, in particular a sealing ring (70), is held on the second duct segment (26) on a face (72) of the second duct segment (26) that faces radially inwards.

9. Guide device (10) according to claim 8, **characterized in that** the sealing element is held on the second duct segment (26) by means of a spoke centering system.

10. Guide device (10) according to any of the preceding claims, **characterized in that** the housing element (12) is designed to be undivided at least in the circumferential direction thereof.

11. Guide device (10) according to any of the preceding claims, **characterized in that** the housing element (12), the guide vane (28) and the duct segments (14, 26) are designed as components that are separately formed and connected to one another at least indirectly.

12. Gas turbine, in particular an aircraft engine, comprising at least one guide device (10) according to any of the preceding claims.

## Revendications

1. Dispositif de guidage (10) destiné à une turbine à gaz, en particulier à un moteur d'aéronef, comportant au moins un élément de boîtier (12), au moins un premier segment de conduit (14) disposé radialement du côté intérieur de l'élément de boîtier (12) et délimitant au moins partiellement au moins un conduit (16), pouvant être traversé par un gaz, radialement vers l'extérieur, au moins un deuxième segment de conduit (26) disposé radialement du côté intérieur du premier segment de conduit (14) et délimitant au moins partiellement le conduit (16) radialement vers l'intérieur, et au moins une aube directrice (28) disposée au moins partiellement dans le conduit (16) et pouvant tourner sur un axe de rotation (30) par rapport à l'élément de boîtier (12) et par rapport aux segments de conduit (14, 26), le deuxième segment de conduit (26) étant fixé à l'aube directrice (28) et étant maintenu à l'élément de boîtier (12) par le biais de l'aube directrice (28) qui est montée sur l'élément de boîtier (12) par le biais d'une douille (36) insérée radialement de l'extérieur vers l'intérieur dans une ouverture de passage (34) de l'élément de boîtier (12),
**caractérisé en ce que**
le premier segment de conduit (14) comporte au moins une ouverture de passage (60) qui est traversée par l'aube directrice (28) et par laquelle le premier segment de conduit (14) est monté, axialement et dans la direction circonférentielle par rapport à l'élément de boîtier (12), par le biais de l'aube directrice (28) et de la douille (36).

2. Dispositif de guidage (10) selon la revendication 1,
**caractérisé en ce que**
le premier segment de conduit (14) est monté par rapport à l'élément de boîtier (12) par le biais d'au moins deux rainures (62, 64) espacées axialement.

3. Dispositif de guidage (10) selon la revendication 2,
**caractérisé en ce que**
la douille (36) a une épaisseur de paroi qui est supérieure à la longueur, saillant dans l'une des rainures (62, 64), d'au moins une des attaches (66, 68) du premier segment de conduit (14).

4. Dispositif de guidage (10) selon l'une des revendications précédentes,
**caractérisé en ce que**
la douille (36) fait saillie radialement vers l'intérieur d'au moins une zone de paroi (58), adjacente à la douille (36), de l'élément de boîtier (12).

5. Dispositif de guidage (10) selon la revendication 4,
**caractérisé en ce que**
l'aube directrice (28) comporte au moins un élément de liaison (38), en particulier une broche, qui est reçu au moins partiellement dans une ouverture de réception correspondante (40) du deuxième segment de conduit (26) et par le biais duquel l'aube directrice (28) est reliée au deuxième segment de conduit (26), la longueur de la douille (36), saillant de la zone de paroi (58) adjacente à la douille (36), étant supérieure à la longueur de l'élément de liaison (38) qui fait saillie dans l'ouverture de réception (40).

6. Dispositif de guidage selon la revendication 5,
**caractérisé en ce que**
un espace libre est ménagé radialement entre le premier segment de conduit (14) et l'élément de boîtier (12), lequel espace libre est supérieur, au moins dans une direction radiale, à la longueur de l'élément de liaison (38) qui fait saillie dans l'ouverture de réception (40).

7. Dispositif de guidage (10) selon l'une des revendications précédentes,
**caractérisé en ce que**
l'aube directrice (28) est montée sur la douille (36) par le biais d'un élément de palier (46) prévu au niveau de l'aube directrice (28) et reçu au moins partiellement dans la douille (36) et au moins partiellement dans l'ouverture de passage (34) de l'élément de boîtier (12).

8. Dispositif de guidage (10) selon l'une des revendications précédentes,
**caractérisé en ce que**
au moins un élément d'étanchéité, en particulier une bague d'étanchéité (70), est maintenue au niveau du deuxième segment de conduit (26) sur un côté (72) du deuxième segment de conduit (26) qui est tourné radialement vers l'intérieur.

9. Dispositif de guidage (10) selon la revendication 8,
**caractérisé en ce que**
l'élément d'étanchéité est maintenu au niveau du deuxième segment de conduit (26) par le biais d'un croisillon de centrage.

10. Dispositif de guidage (10) selon l'une des revendications précédentes,
**caractérisé en ce que**
l'élément de boîtier (12) est formé d'une pièce au moins dans sa direction circonférentielle.

11. Dispositif de guidage (10) selon l'une des revendications précédentes,
**caractérisé en ce que**
l'élément de boîtier (12), l'aube directrice (28) et les segments de conduit (14, 26) sont réalisés sous la forme de composants séparés les uns des autres et reliés au moins indirectement entre eux.

12. Turbine à gaz, en particulier moteur d'avion, comprenant au moins un dispositif de guidage (10) selon l'une des revendications précédentes.
